# EUROPÄISCHE PATENTSCHRIFT

(11) **EP 0 334 804 B1**
(45) Veröffentlichungstag und Bekanntmachung des Hinweises auf die Patenterteilung: **02.11.1994**
(21) Anmeldenummer: 89730081.0
(22) Anmeldetag: 22.03.1989
(51) Int. Cl.: H04B 5/00

(54) **Phasenstabilisierter, -gekoppelter Schwingkreis**
Resonant circuit with stabilized phase coupling
Circuit résonnant à couplage de phase stabilisé

(30) Priorität: 25.03.1988 DE 3810702
(43) Veröffentlichungstag der Anmeldung: 27.09.1989
(73) Patentinhaber: Angewandte Digital Elektronik GmbH, 21521 Dassendorf (DE)
(72) Erfinder: Kreft, Hans-Dietrich, D-2055 Dassendorf (DE); Hass, Wolfgang, D-2050 Hamburg 80 (DE); Mackenthun, Holger, D-2000 Hamburg 65 (DE)

(56) Entgegenhaltungen:
- EP-A- 0 185 610
- GB-A- 2 173 623

## Beschreibung

Die Erfindung betrifft ein kontaktlos arbeitendes Energie- und Datenübertragungssystem, bestehend aus einem unbeweglichen Teil, Mikrostation MS und einem bewegbaren Teil, Mikroeinheit ME.

In unterschiedlichen Anwendungen werden Datenträger und Datengeräte z.B. in Form von Chipkarten mit integrierten elektronischen Bauteilen eingesetzt. Fast alle derart am Markt erhältlichen Systeme sind mit Kontakten zwischen Lesegerät und Karte ausgelegt. Kontakte wirken sich nachteilig bei der Verschmutzung, statischen Entladungen, Vibrationen und Abnutzung aus.

Diese Nachteile treten bei einem kontaktlos, induktiv arbeitenden System nicht auf.

Werden Energie und Signale berührungsfrei übertragen, liegt es nahe, eine solche Übertragungfrequenz zu benutzen, daß auf seiten der Mikroeinheit ME Clocksignale zum Betrieb der in der Mikroeinheit ME verwendeten Elektronikbaugruppen verwendet werden können, die der Übertragungsfrequenz gleich sind oder mittelbar durch Unterteilung aus ihr gewonnen werden können. Außerdem soll die verwendete Frequenz internationalen Richtlinien evtl. Normen, entsprechen. Damit muß die verwendete Frequenz konstant gehalten werden. Dies widerspricht der Änderung ( Alterung, Bauteiletoleranz ) von Bauteilen, welche im Schwingkreis zur Erzeugung der Übertragungsschwingung verwendet werden, womit bei derart geänderten Bauteileparametern die Eigenfrequenz des Schwingkreises nicht mehr mit der Steuerfrequenz übereinstimmt und damit die Energieübersetzung von Mikrostation MS zur Mikroeinheit ME verringert wird.

Als weitere Bedingung kommt hinzu, daß zwei Schwingkreise aufzubauen sind, welche aus Gründen eindeutiger Signalerkennung auf seiten der Mikroeinheit ME ein konstantes Phasenverhältnis zueinander haben müssen.

Diese geschilderte Problematik läßt sich im wesentlichen in die Forderung zusammenfassen:
Es ist eine Schwingkreiselektronik bei vorgegebener, unveränderlicher, eingeprägter (d.h. gesteuerter) Frequenz so regeltechnisch während des Betriebes zu optimieren, daß bei Bauteiletoleranz und unterschiedlichen Umwelteinflüssen möglichst die Eigenfrequenz gemäß der Steuerfrequenz ist. Dieses Ziel wird insbesondere dadurch erreicht, daß in einem Parallelschwingkreis mit Hilfe von Kapazitätsdioden die parallelgeschaltete Resonanzkapazität geregelt wird. Zu beachten ist zusätzlich, daß die Dioden in ihrem spannungsmäßig vorgeregelten Arbeitsbereich benutzt werden.

Die hier dargelegte Erfindung ist durch folgende Merkmale gekennzeichnet:
1. Die Mikroeinheit ist eine eigenständige elektronische Einheit (z.B. Mikrocomputersystem), die kontaklos an dafür vorgesehenen Mikrostationen betrieben werden kann.
2. Die Mikroeinheit benötigt für den Betrieb in einer Mikrostation keinen eigenen Oszillator, da der Verarbeitungstakt aus der Energieübertragung gewonnen wird.
3. Die Mikrostation MS als auch die Mikroeinheit ME sind derart konstruiert , daß ein Betrieb des Systems unabhängig von der Lage der Mikroeinheit ME in der Aufnahmevorrichtung der Mikrostation MS, unter Berücksichtigung der mechanischen Passung, gewährleistet ist.
4. Die Energie- und die bidirektionale Datenübertragung zwischen Mikrostation MS und Mikroeinheit ME geschieht kontaktlos nach dem Phasensprungverfahren Patent Nr. DE-C-3 447 560 und dem Synchronschalterprinzip.
5. Die für die induktive Energiekopplung notwendige Treiberstufe in der Mikrostation MS wird mit einer Regelstrecke betrieben, die eine einfache Fertigung einer Mikrostation MS erlaubt und alle kritischen Einflüsse einer induktiven Übertragung herabsetzt.
6. Die Mikroeinheit ME kann gleichzeitig zu ihrer elektrischen Funktion nach Anspruch 1 gleichfalls mit einem Magnetstreifen ausgerüstet sein und als Magnetkarte arbeiten, ohne daß eine Störung der Magnetstreifenablesung bzw. induktiven berührungslosen Signalübertragung auftritt. Für die sichere Arbeitsweise und den Aufbau einer induktiven Energie- und Datenübertragungsstrecke müssen mehrere Parameter eingehalten werden. Diese Forderung ergibt sich aus den physikalischen Grundlagen, da für ein magnetisches Feld, welches als Transformationsmedium benutzt wird, immer Ort, Raum und Richtung zu berücksichtigen sind.

Der nachstehende Text beschreibt ein Verfahren, mit dem es möglich ist, alle problematischen Parameter, die bei der induktiven Übertragungsstrecke vorkommen, zu eliminieren.

Die induktive Übertragungsstrecke dieses Systems gliedert sich in die wesentlichen Merkmale:
- Energieübertragung
- Regelkreis
- Magnetstreifenverträglichkeit
- Datenübertragung
- Lagenvarianz
- Taktgenerierung

### Energieübertragung

Die Energie-Transformation von der Mikrostation MS zur Mikroeinheit ME, z.B. Chipkarte, geschieht induktiv über zwei Spulen in einem Frequenzbereich, der in der Größenordnung des benötigten Systemtaktes für die Mikroeinheit ME liegt, da der Systemtakt für die Mikroeinheit ME, z.B. Mikrocomputer, direkt aus der Übertragungsfrequenz abgeleitet wird, so daß kein Oszillator auf der Mikroeinheit ME erforderlich ist.

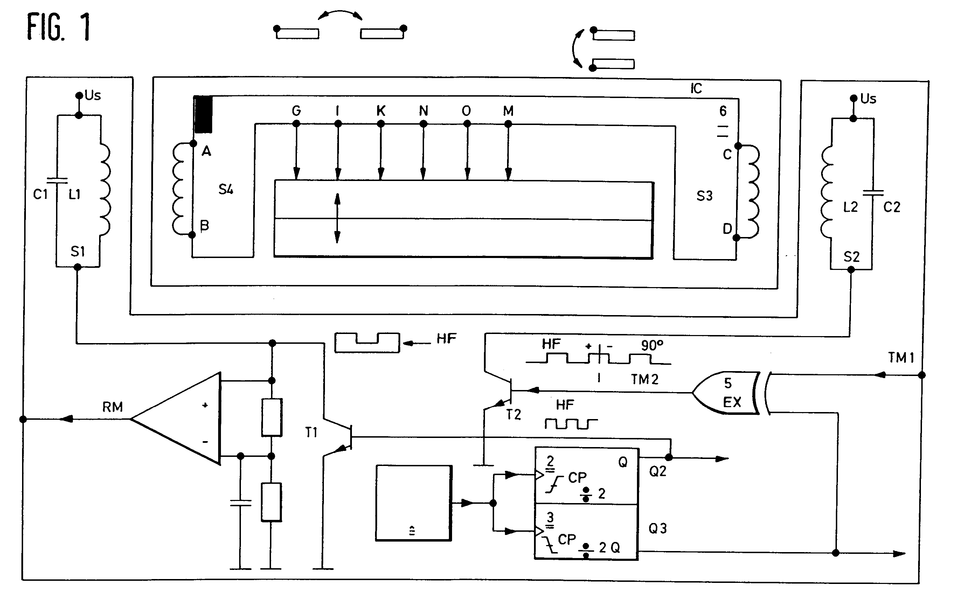

Die Energieaufbereitung erfolgt in zwei frequenzgekoppelten Schwingkreisen ( Bild 1: T1, S1 und T2, S2 ) bei einer Frequenz von beispielweise 6 MHz.

Die Ferritkernspulen der Schwingkreise beinhalten einen Luftschlitz, in den die jeweiligen flächigen Spulen S3 und S4 der Mikroeinheit ME eingeführt werden. Die magnetische Durchflutung ist damit senkrecht zu den flächigen Spulen.

Die zwei Schwingkreise arbeiten mit einer geregelten Phasenverschiebung von +/- 90° gegeneinander.

Die Verwendung von Schwingkreisen hat den Vorteil, daß relativ wenig Energieaufwand für den Betrieb des Systems erforderlich ist, wenn diese sehr stark selektiv und mit Resonanzüberhöhungen, d.h. in der Nähe der Eigenresonanz, arbeiten.

Äußere Einflüsse, Bauteilestreuung und unterschiedliche Mikroeinheiten ME führen im einfachen Aufbau dazu, daß die Kreise S1 und S2 verstimmt werden. Die Folge davon wäre:
- zu wenig Energie für die Mikroeinheit ME
- die erforderliche 90° Phasendifferenz zwischen S1 und S2 ist nicht gegeben.

Diese Mängel, die zu Funktionsstörungen führen könnten, werden dadurch behoben, daß jeder Kreis S1 und S2 in einem eigenständigen Regelkreis gleicher Frequenz aufgebaut ist.

### Regelkreis

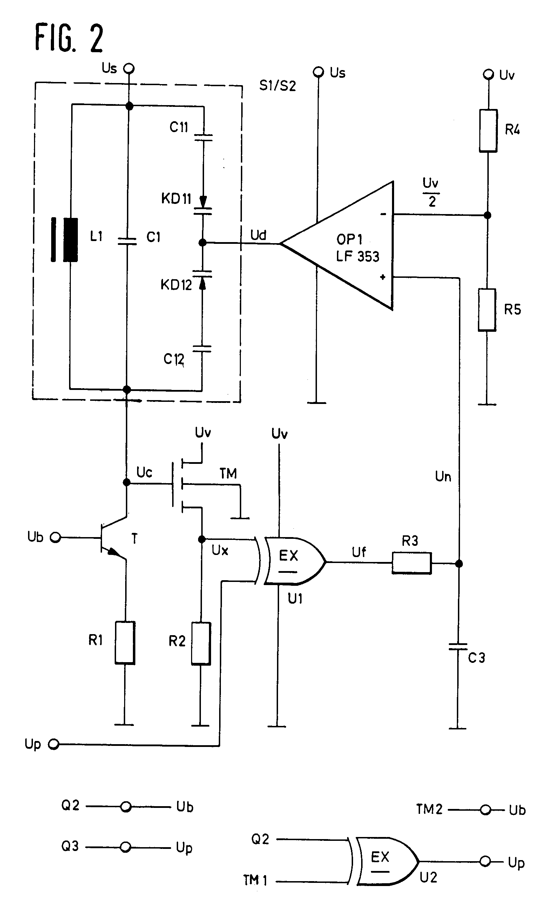

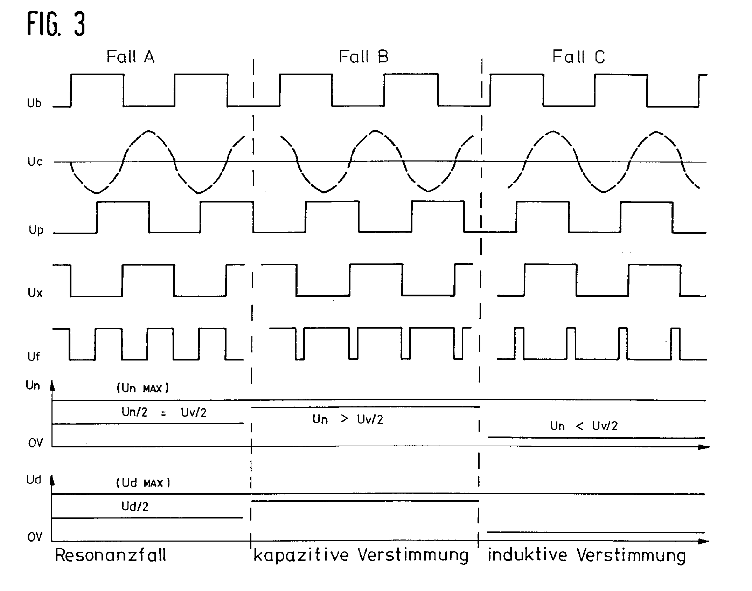

Bild 2 zeigt den prinzipiellen Aufbau des Regelkreises, der in dem gestrichelt eingerahmten Teil mit der Kennzeichnung S1/ S2 der zwei Schwingkreise ausweist, wovon ein Schwingkreis mit der Bezeichnung Elementen Spule L1, Kondensatoren C1, C11, C12 und Kapazitätsdioden KD11 und KD12 dargestellt und der nicht dargestellte Schwingkreis S2 demgemäß aus der Elementen Spule L2, Kondensatoren C2, C21, C22 und Kapazitätsdioden KD21 und KD22 besteht. Der Regelkreis macht sich die physikalische Eigenschaft des Schwingkreises zunutze, daß im jeweils angestrebten Resonanzfall der Kreis S1/S2, Bild 2, ausschließlich als realer Widerstand wirkt. In diesem Fall ist die Phasenlage der Spannungen zwischen Kollektor und Basis des Treiber-Transistors T, Bild 2, genau 180°. Sowie eine Verstimmung des Kreises auftritt, ist die Bedingung Uc zu Ub = 180° (Bild 3) nicht mehr gegeben.

Die Phasenlage des Kreises wird mit der Spannung Uc abgegriffen. Ein übersteuerter MOS-Transistor TM, Bild 2, erwirkt eine Pegelanpassung an den mit Niedervolt arbeitenden Logikbaustein U1, einem EXCLUSIV- Oder-Gatter, (gleichbedeutend mit einem PLL = Phase-Look-Loop). Die daraus gewonnene Spannung Ux wird mit Up, einer in der Schaltung ohnehin vorhandenen und vom Oszillator, abgeleiteten Spannung, Bild 1 (Q2 oder Q3) und Bild 2 unten (Up = Ub - 90°), verglichen. Dieses für einen Kanal erforderliche Referenz-Signal Up, z.B. Q2 (Bild 1), wird vom jeweils anderen Kanal, z.B. Q3 (Bild 1), gewonnen, womit kohärente Signalverläufe zur Regelung herangezogen werden. Dadurch ist gewährleistet, daß beide Schwingkreise dieselbe Frequenz bei konstanter Phasenverschiebung einhalten.

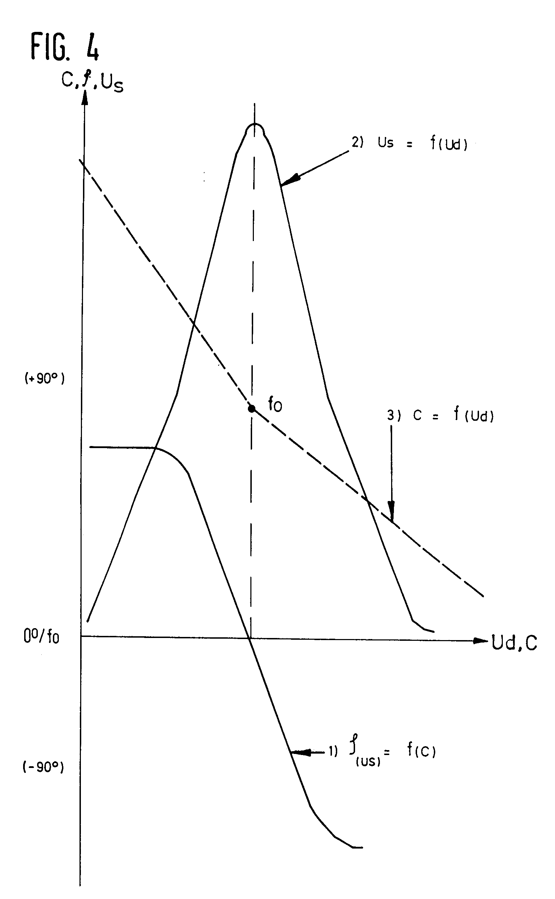

Das symmetrische Tastverhältnis von Uf (Bild 3, Fall A), welches sich nur bei abgeglichenem Kreis einstellt, bewirkt am Integrationsglied R3, C3 (Bild 2), daß die Spannung Un = Uv / 2 ist. Der nachgeschaltete OP1 vergleicht Un mit Uv / 2 und ist über seine Verstärkung so eingestellt, daß eine Anpassung der Regelspannung Ud an das Großsignalverhalten des Kreises gegeben ist. Wenn Ux = Ub +/- 180°, ist Un = Uv / 2. Der Kreis arbeitet im Resonanzpunkt (Bild 4).

Jede Verstimmung und Ungleichheit von Ux ungleich Ub +/- 180° (Bild 3, Fall B und Fall C) führt dazu, daß Un ungleich Uv / 2 ist und daß der Kreis über Ud nachgestimmt wird.

Der Eingriff in das Resonanzverhalten des Kreises erfolgt mit den spannungsabhängigen Kapazitätsdioden KD11 + KD12 (Bild 2) über die Steuerspannung Ud. Entgegen dem Abstimmverfahren bei Filtern können in diesem Fall die Dioden aufgrund ihrer Anordnung in der Schaltung durch ihren gesamten Kennlinienbereich C = f (Ud) gefahren werden (Bild 4). Diese Möglichkeit resultiert aus dem Großsignalverhalten des Schwingkreises, das erforderlich ist, um einen möglichst hohen Strom in der Übertragungsspule L1 (Bild 2) fließen zu lassen, um so genügend Energie auf die Mikroeinheit transformieren zu können. Die Kondensatoren C11 und C12 arbeiten als Spannungsteiler, um die zulässige Sperrspannung der in Serie geschalteten Kapazitätsdioden KD11 und KD12 (Bild 2) nicht zu überschreiten.

Die Kapazitäts-Dioden haben für die Funktion C = f (Ud) (Bild 4, Kurve 3) eine gekrümmte Kennlinie, die zu Verzerrungen im Ausgangssignal führen könnte. Diese Verzerrungen werden umso stärker, je weiter die Kennlinie ausgesteuert wird. Aus diesem Grund werden zwei Kapazitätsdioden (KD11, KD12, Bild 2) wechselstrommäßig antiparallel in den Kreis geschaltet, so daß sich die Verzerrungen im Schwingkreis aufheben.

Der vorgestellte Regler nach Bild 2 wird zweifach für die Kreise S1, T1 und S2, T2 (Bild 1) aufgebaut.
- Vorteile:: - Parameteränderungen werden ausgeregelt
- Umwelteinflüsse werden ausgeregelt
- Die für die Phasenmodulation erforderlichen 90° zwischen S1 und S2 (Bild 1) werden überwacht und gehalten.
- Die Verlustleistung in den Kreisen wird auf ein Minimum beschränkt

Nachfolgend beschriebener Funktionsablauf zeigt das Regelverhalten auf: Durch eine angenommene Einwirkung, z.B. Bauteiltoleranzen, Betrieb von unterschiedlichen Mikroeinheiten, soll sich der kapazitive Anteil im Schwingkreis vergrößert haben. Die Eigenresonanzfrequenz des einzelnen Kreises mit Spule und Kondensator sinkt in diesem Falle. Da aber von außen durch den Treiber eine feste Frequenz vorgegeben wird, ändert sich die Phase und damit auch die Amplitude (siehe Bild 4).

Die Phase der Spannung Ux wird gegenüber der Spannung Up mehr als 90° Phasendifferenz nacheilen (Fall B, Bild 3). Der Mittelwert des Signals Uf (Un) steigt. Durch den Vergleich mit Uv / 2 (Uv = Versorgungsspannung) steigt die Regelspannung Ud. Wenn Ud steigt, fällt gleichfalls die Stellkapazität und wirkt der eigentlichen Verstimmung des Kreises entgegen (siehe Bild 4).

Die gleiche Betrachtung, nur mit entgegengesetztem Regelverhalten, kann für den Fall C der induktiven Verstimmung (Bild 3) angestellt werden.

Der realisierte Regelkreis nach Bild 2 beinhaltet eine zusätzliche Funktion, die erforderlich ist, da der Kreis S2 (Bild 1 ) durch das EXCLUSIV-ODER-Gatter "5", mit den an die ME zu übertragenden Daten, Phasenwechsel von 180° erfährt.

Diese Phasenwechsel dürfen nicht zu einer Änderung der Regelspannung Un führen, da hierdurch der Kreis verstimmt würde. Die Beschaltung der Stufe T2, S2 ist gleich der Stufe T1, S1, (Bild 1) mit einer Ausnahme. Die Stufe T2, S2 wird, wie aus Bild 2 ersichtlich, mit dem phasenumschaltbaren Signal TM2 betrieben. Die Referenzphase für den Vergleich im EXCLUSIV-ODER-Gatter U1 wird von Q2 gewonnen. Im Falle einer Datenübertragung wird zur Konstanterhaltung der Regelspannung, gleichfalls wie das Signal TM2, auch das Signal Q2 über ein EXCLUSIV-ODER-Gatter U2 invertiert. Kleine, insbesondere kurzfristige Störungen während des Umschaltens machen sich nicht bemerkbar, da die Zeitkonstante T = R₃C₃ ausreichend groß gewählt werden kann.

### Magnetstreifenverträglichkeit:

Bei Verwendung eine Chipkarte mit Magnetstreifen als ME erfährt die magnetische Codierung auf dem Magnetstreifen keine Beeinflussung.

Diese Eigenschaft ist darauf zurückzuführen, daß der magnetische Fluß mit einer Frequenz f > 1 MHz die Karte senkrecht durchflutet. Die magnetischen Teilchen des Magnetstreifens haben aufgrund ihrer Trägheit und Richtung keine Möglichkeit, ihre Lage zu verändern.

### Datenübertragung:

Wie eingangs erwähnt, arbeiten die beiden Schwingkreise mit einem Phasenunterschied von +/- 90°. Im Ruhezustand (keine Datenübertragung) arbeitet der Schwingkreis S1 immer 90° voreilend gegenüber Schwingkreis S2. Bei einer Datenübertragung zur Mikroeinheit wird S2 um 180° geschaltet, so daß dieser daraufhin 90° voreilend gegenüber Kreis S1 ist. Dieser Vorgang wird von der ME ausgewertet.

Eine von der Mikroeinheit ME zur Mikrostation MS gerichtete Datenübertragung geschieht durch eine erhöhte Stromaufnahme seitens der Mikroeinheit ME. Über den Innenwiderstand der Quelle in der Mikrostation MS kann ein Spannungseinbruch detektiert werden.

Dieses Verfahren wird durch das Patent (Nr. DE-C-3 447 560) beschrieben.

### Lagenvarianz:

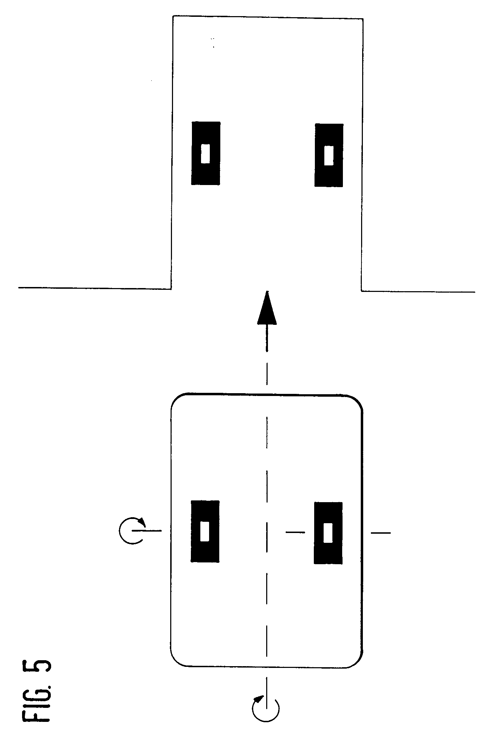

Wie aus dem Anspruch ersichtlich, ist die Funktion des Systems nicht in der Lage der Mikroeinheit ME in der Aufnahmevorrichtung abhängig. Hierzu wurden die jeweils 2 benötigten Spulen der Mikroeinheit ME und Mikrostation MS bei dem Chipkartensystem, wie auf Bild 5 dargestellt, angebracht (siehe Gebrauchsmuster DE-U-8 716 548). Dadurch ist gewährleistet, daß, gleichgültig wie die Mikroeinheit ME vor Einführung in die Aufnahmeeinrichtung der Mikrostation MS gedreht wurde, sich die 2 Spulen der Mikroeinheit ME den 2 Spulen der Mikrostation MS gegenüberliegen, wodurch die Funktion immer gewährleistet und das Handling des Systems vereinfacht ist.

### Taktgewinnung:

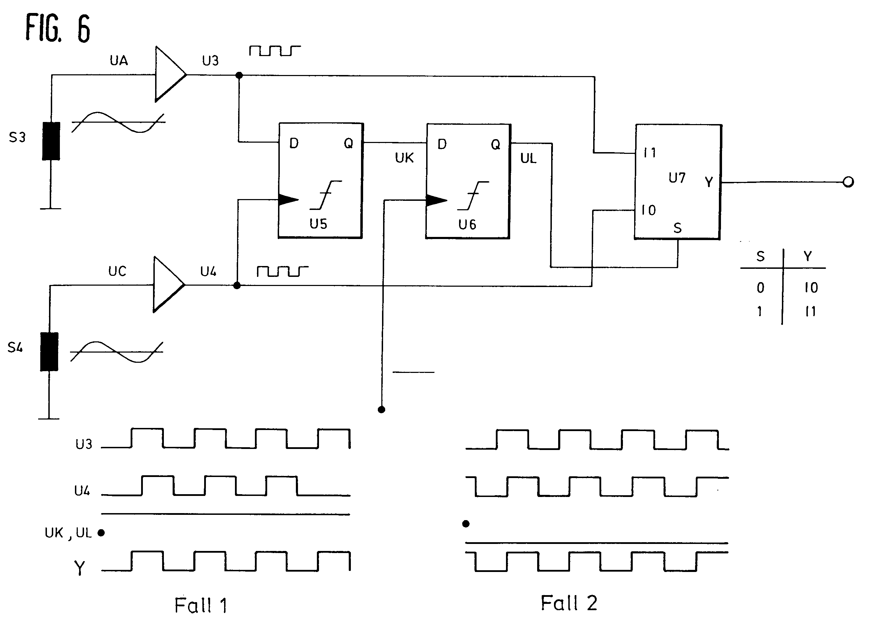

Auf der Mikroeinheit ME kann ein Rechenwerk, Mikrocomputer etc. untergebracht sein. Der erforderliche Verarbeitungstakt wird direkt oder geteilt aus der Frequenz der Energieübertragung gewonnen (siehe Bild 6). U3 und U4 gewinnen aus der sinusförmigen Analogspannung der Empfängerspulen ein Digitalsignal. Für die Mikroeinheit ME ist kein eigener Oszillator erforderlich, welches zur wesentlichen Vereinfachung der Mikroeinheit ME beiträgt. Grundvoraussetzung für den einwandfreien Betrieb eines Rechenwerks in einer Mikroeinheit ME ist, daß der Verarbeitungstakt symmetrisch und ohne Unregelmäßigkeiten zur Verfügung steht. Da die Mikroeinheit ME in einer beliebigen Einschublage in der Mikrostation MS arbeiten soll, muß dafür Sorge getragen werden, daß der Takt von der jeweils nichtmodulierten Spule abgenommen wird (Bild 5).

Ein Phasensprung wird immer, wie aus Bild 1 ersichtlich, über die Spule S2 erfolgen. Mit dieser und der weiteren Grundvoraussetzung, daß ohne Datenmodulation Spule S1 immer Spule S2 um 90° voreilend ist, kann seitens der Mikroeinheit ME eine Erkennung in beliebigen Betriebslagen erfolgen.

Hierzu ist die Schaltung nach Bild 6 in der Mikroeinheit ME aufgebaut.

Fall 1 und Fall 2 zeigen die verschiedenen Signalverläufe in unterschiedlichen Betriebslagen (siehe hierzu auch Bild 5).

Fall 1 zeigt, daß U3 voreilend gegenüber U4 ist:
Die Phasenmodulation erfolgt später auf U4.
Die Taktgewinnung erfolgt aus U3.

Fall 2 zeigt, daß U4 voreilend gegenüber U3 ist:
Die Phasenmodulation erfolgt später auf U3.
Die Taktgewinnung erfolgt aus U4.

Das Flip-Flop U5 erkennt am Ausgang eine Logisch "1" für Fall 1 und eine Logisch "0" für den Fall 2. Etwas zeitverzögert, wenn sich die Betriebsspannung der Mikroeinheit ME aufgebaut hat und eine Verzögerungszeit von wenigen Mikrosekunden abgelaufen ist, erfolgt eine positive Resetflanke am Flip-Flop U6.

Dieser Vorgang geschieht immer nur einmalig mit Betriebsbeginn, wenn noch keine Daten übertragen werden.

Das Signal UL liegt am Steuereingang des Multiplexers. Im Fall 1, UL = 1, wird Kanal 11 durchgeschaltet, während für den Fall 2, UL = 0, Kanal I0 durchgeschaltet wird.

Diese Zustände bleiben für die gesamte Betriebsdauer bestehen.

## Patentansprüche

1. Einrichtung zur berührungslosen Signal- und Energieübertragung bestehend aus einem unbeweglichen Teil, der Mikrostation MS und einem bewegbaren Teil, der Mikroeinheit ME, wobei die Schwingung eines auf der Mikrostation MS befindlichen Oszillators in zwei getrennte um 90°phasenverschobene Schwingungen Q2, Q3 aufgespaltet ist und der einen Schwingung Q3 in Abhängigkeit von einem Datenstrom TM1 eine Phasenverschiebung gegenüber Schwingung Q2 aufgezwungen wird und diese phasenverschobene Schwingung TM2 über ein erstes Spulenpaar S2, S3 und die andere Schwingung Q2 über ein zweites Spulenpaar S1, S4 der Mikroeinheit ME zugeführt wird und außerdem die Leistungsübertragung mit Hilfe der beiden Schwingungen Q2, TM2 über dieselben Spulenpaare S2, S3 und S1, S4 erfolgt, wobei in der Mikroeinheit ME die übertragenen Schwingungen einem Phasenvergleicher IC2, IC3 zugeführt werden, welcher an der Phasenverschiebung die Daten aus dem Datenstrom wieder gewinnt, ferner, erfolgt die Datenübertragung von der Mikroeinheit ME zur Mikrostation MS durch gleichzeitige Belastungsänderung an den beiden Spulen S3, S4 der Mikroeinheit ME, wodurch gewährleistet ist, daß an einer der beiden Spulen S1, S2 der Mikrostation MS auch bei vertauschter Zuordnung der Spulenpaare ein Nachweis der Belastungsänderung möglich ist, dadurch gekennzeichnet, daß:
die beiden in der Mikrostation MS befindlichen Schwingkreise S1 bzw. S2, bestehend jeweils aus der Induktivität L1 bzw. L2, den Kapazitäten C1, C11, C12, bzw. C2, C21, C22, den Kapazitätsdioden KD11, KD12, bzw. KD21, KD22, welche phasenverschoben resonanzstabilisiert sind, indem die beiden kohärenten Schwingungen mit feststehender Phasenverschiebung für die Ansteuerung je eines Schwingungskreises über einen Transistor T als Treiber zur Verfügung stehen, und bei Resonanz eines Schwingkreises dieser als realer ohmscher Wiederstand an seinem in Serie geschalteten Treibertransistors T wirkt, wodurch zwischen schwingungserzeugendem Signal Ub, an der Basis des Treibertransistors, und Spannungsabgriff Uc am Schwingkreis genau eine Phasenverschiebung von 180° besteht, welche bei Nicht-Resonanz von diesem Phasenwert abweicht, und die Abweichung bei Vergleich mit dem Referenzsignal Up, welches durch Schwingung Q2 zur Verfügung gestellt wird, über geeignete Schaltglieder Transistor TM und Exclusive-Oder-Gatter EX in ein von der Phasenverschiebung abhängiges Tastverhältnis einer Pulsserie gewandelt wird, und dieses Tastverhältnis über ein R, C - Glied Widerstand R3 und Kondensator C3 integriert und der dadurch erhaltene Spannungswert mit einem Standartspannungswert verglichen wird und über einen Operationsverstärker OP1 die Kapazitätsdioden KD11, KD12 steuert, womit der Schwingungskreis auf seine eingespeiste Frequenz stabilisiert ist, und bei Anwendung desselben Verfahrens auf einen zweiten Schwingkreis, ebenfalls bestehend aus Induktivität, Kapazitäten und Kapazitätsdioden sowie Treibertransistor, wobei als schwingungserzeugendes Signal der über die Induktivität L2 eingespeiste kohärente phasenverschobene Teil zur Verfügung steht, auch dieser zweite Schwingkreis auf dieselbe Frequenz stabilisiert ist und somit beide frequenzstabilisierten Schwingungen eine definierte Phasenverschiebung zueinander haben, welche über die Induktivität L1, L2 den Spulen S3 und S4 der Mikroeinheit ME frequenzstabilisiert, phasenverschoben zur Verfügung stehen, womit die Mikroeinheit ME ihren Systemtakt direkt aus der Übertragungsfrequenz ableiten kann, somit kein Oszillator auf der Mikroeinheit ME erforderlich ist und eine Erkennung und Auswertung der Phasenverschiebung zulassen und aufgrund der Frequenzstabilität eine zeitdefinierte, standardisierte Baudrate des Datenstrom gewährleisten.

## Claims

1. An apparatus for non-contacting signal and energy transmission consisting of an immobile part, the microstation MS and a mobile part, the microunit ME, at which the microstation MS having an oscillator operable to produce to an oscillation and having means for dividing the oscillation into two separate oscillations Q2, Q3, which are phase shifted by 90°, and depending on data stream TM1 a phase shift is forced on the one oscillation Q3 relative to oscillation Q2 and this phase shifted oscillation TM2 is being supplied via a first pair of coils S2, S3 and the other oscillation Q2 via a second pair of coils to the microunit ME and besides the power transmission with assistance of the two oscillations Q2, TM2 is ensued via the same pairs of coils S2, S3 and S1, S4, at which the transmitted oscillations are supplied to a phase comparator IC2, IC3 in the microunit ME, the phase comparator acquiring the data from the data stream with reference to the phase shift, moreover data transmission from microunit ME to microstation MS is ensued on the basis of simultaneous load modification at both coils S3, S4 of the microunit ME, so that it is assured that documentation of load variation is possible at one of the two coils S1, S2 of microstation MS even in case of interchanged allocation of the coil pairs, thereby characterized that:
the two resonant circuits S1 respectively S2 positioned in the microstation MS, consisting of respectively an inductance L1 respectively L2, the capacitances C1, C11, C12 respectively C2, C21, C22, the capacitive diodes KD11, KD12, respectively KD21, KD22, being resonant stabilized in a phase shifted fashion, while the two coherent oscillations with fixed phase shift are available for the activation of one resonant circuit each via a transistor T as driver, and in case of resonance of the resonant circuits the said resonant circuit acts as a real ohmic resistance at its connected in series driver transistor T, by which between an oscillation generating signal Ub, applied at a base of the driver transistor, and voltage tap Uc at the resonant circuit a phase shift of exactly 180° exists, which deviates in case of non-resonance from this phase value, and the deviation at comparison with the reference signal Up, which is made available through oscillation Q2, is converted via appropriate logic elements transistor TM and exclusive-or-porte EX into a pulse-duty factor depending on phase shift, and this pulse-duty factor integrates via a R, C-element resistance R3 and capacitor C3 and the with it obtained voltage value is compared to a standard voltage value and drives the capacitor diodes KD11, KD12 via an operational amplifier OP1, whereby the resonant circuit is stabilized to its fed into frequency and at application of the same operation to a second resonant circuit, consisting likewise of inductance, capacitances and capacitive diodes as well as driver transistor, at which as oscillation generating signal the coherent phase shifted part fed into via inductance L2 is available, this second resonant circuit is also stabilized to the same frequency and consequently both frequency stabilized oscillations have a defined phase shift relative to one another, being available to the coils S3 and S4 of the microunit ME via the inductance L1, L2 in a frequency stabilized, phase shifted manner, by which the microunit ME derives its system pulse directly from the transmission frequency, consequently no oscillator is required on the microunit ME and recognition and evaluation of the phase shift is allowed and a time defined, standardized Baud rate of the data stream on basis of the frequency stability is guaranteed.

## Revendications

1. Dispositif pour la transmission sans contact de signal et d'energie existant d'une partie immobile, la microstation MS et d'une partie mobile, la microunité ME, où l' oscillation d'un oscillateur existant sur la microstation MS est partagée en deux oscillations Q2, Q3 deconnectées et déphasagées par 90°, et un déphasage envers l'oscillation Q2 est forcé à l'une oscillation Q3 en dépendance d'un flux de données TM1, et cette oscillation déphasagée TM2 est alimentée sur une première paire de bobines S2, S3 et l'autre oscillation Q2 est alimentée sur une seconde paire de bobines S1, S4 à la microunité ME, et en outre la transmission de puissance est effectuée à l'aide des deux oscillations Q2, TM2 sur les mêmes paires de bobines S2, S3 et S1, S4, où dans la microunité ME, les oscillations transmisées sont alimentées à un comparateur de phases IC2, IC3 le comparateur de phases obtient de nouveau au déphasage les données du flux de données, en outre la transmission de données de la microunité ME à la microstation MS est effectuée par une changement de charge simultanée aux deux bobines S3, S4 de la microunité ME, par où il est garantie que à une des deux bobines S1, S2 de la microstation MS la preuve de la changement de charge est aussi possible en cas d' adjonction échangée des paires de bobines, est caractérisé du fait que:
les deux circuits oscillants S1 respectivement S2, qui se trouvent sur la microstation MS, composés respectivement de l'inductance L1 respectivement L2, les capacitées C1, C11, C12 respectivement C2, C21, C22, les diodes de capacité KD11, KD12 respectivement KD21, KD22, quelles sont déphasagées stabilisées à résonance, pendant que les deux oscillations cohérentes avec déphasage fixe sont à la disposition pour la excitation de chaque circuit oscillant via un transistor T comme circuit d'attaque et en cas de résonance d'un circuit oscillant celui-ci agit comme une résistance ohmique réele au son transistor d'attaque T couplé en série, par où entre le signal oscillant Ub, à la base du transistor d'attaque, et le prise de tension Uc au circuit oscillant un déphasage de exactement 180° existe, quel dévie en cas de non-résonance de cette valeur de phase, et la déviation en comparaison du signal référence Up, quel est mis à la disposition par l'oscillation Q2, sur éléments logiques appropriés transistor TM et exclusive-ou-porte EX est transformé en un rapport durée de passage de courant pendant le cycle d'un train d'impulsions dépendant du déphasage, et ce rapport intégre via un R, C élément résistance R3 et condenseur C2 et la valeur de voltage obtenue de celle manière est comparée avec une valeur de voltage standard et contrôle sur un amplificateur d'opération OP1 les diodes de capacité KD11, KD12, avec quoi le circuit oscillant est stabilisé sur sa fréquence alimentée, et en cas d'usage de la même opération sur un second circuit oscillant, composé aussi de l'inductance, capacitées et diodes de capacité ainsi que de transitor d'attaque à quoi comme signal oscillant la cohérente partie déphasagée alimentée sur l'inductance L2 est mis à la disposition, et aussi ce deuxième circuit oscillant est stabilisé sur la même fréquence et par conséquent les deux oscillations stabilisées en fréquence ont l'une à l'autre un déphasage défini, lesquelles sont via l'inductance L1, L2 stabilisées en fréquence, déphasagées à la disposition des bobines S3 et S4 de la microunité ME, de quoi la microunité ME peut dériver sa impulsion de système directement de la fréquence de transmission, donc aucun oscillateur est nécessaire sur la microunité ME et permets la reconnaissance et l'evaluation de déphasage et en raison de la stabilité de fréquence une Baud quote-part definie à temps, standardisée du flux de données est garantie.
